# EUROPÄISCHE PATENTSCHRIFT

(11) **EP 1 208 737 B1**
(45) Veröffentlichungstag und Bekanntmachung des Hinweises auf die Patenterteilung: **17.03.2004**
(21) Anmeldenummer: 01127112.9
(22) Anmeldetag: 15.11.2001
(51) Int. Cl.: A01F 12/40

(54) **Verteileinrichtung für Häcksler**
Distributing device for a chopper
Répartiteur pour hachoir

(30) Priorität: 20.11.2000 DE 20019686 U
(43) Veröffentlichungstag der Anmeldung: 29.05.2002
(73) Patentinhaber: Heuling Maschinenbau GmbH & Co. KG, 49326 Melle-Neuenkirchen (DE)
(72) Erfinder: Schulze Heuling, Ulrich, 48231 Warendorf (DE); Menzel, Volker, 49326 Melle (DE)
(74) Vertreter: Strauss, H.-J., Dr.

(56) Entgegenhaltungen:
- EP-A- 0 212 270
- EP-A- 0 917 819
- EP-A- 0 993 764
- DE-A- 4 313 841
- GB-A- 2 165 732
- US-A- 5 569 081

## Beschreibung

Die Erfindung betrifft eine Verteileinrichtung für Häcksler an einem Mähdrescher, welche aus einem haubenartig ausgebildeten Gehäuse besteht, in dem schwenkbar gelagerte Leitbleche in Gruppen angeordnet sind, um einen konvergierenden bzw. divergierenden Strohauswurf zu bewirken.

Eine derartige Verteileinrichtung ist nach dem Stand der Technik aus der DE 35 30 195 C1 bekannt. Die Verteileinrichtung findet in der Regel ihren Einsatz hinter Anbauhäckslern an Mähdreschern. Um auf den Strohauswurf einwirken zu können, sind bei der bekannten Verteileinrichtung in einem haubenartigen Gehäuse schwenkbar gelagerte Leitbleche in Gruppen angeordnet. Diese Leitblechgruppen können unabhängig voneinander stufenlos gesteuert werden. Das aus dem Häcksler austretende Stroh wird dadurch konvergierend oder divergierend geführt, so dass sich ein enges bzw. ein breites Auswurfbild ergibt. Mit der Verteileinrichtung ist auch ein gezielter Auswurf sowohl zur linken als auch zur rechten Seite möglich, wenn die Leitblechgruppen entsprechend ausgerichtet werden. Diese Einstellmöglichkeit findet Anwendung, wenn bei Wind gehäckseltes Stroh hinter dem Mähdrescher zur Seite gegen das noch nicht gemähte Getreide geweht wird und es dann bei der nächsten Feldumrundung zu Verstopfungen im Schneidwerk führt. Für diese Einsatzbedingungen werden auch motorische oder kraftbetätigte Antriebe zur Verstellung während der Fahrt eingesetzt.

Bei dieser nach dem Stand der Technik bekannten Verteileinrichtung ergibt sich das Problem, dass auf Grund der beweglich gehaltenen Leitbleche, die für eine Grundeinstellung individuell zueinander einstellbar sein müssen, in dem haubenartigen Gehäuse eine aufwendige Mechanik erforderlich ist, um den Strohauswurf zu beeinflussen.

Es ist daher die Aufgabe der Erfindung vor dem aufgezeigten Stand der Technik eine Verteileinrichtung für Häcksler an einem Mähdrescher der Art weiter zu bilden, dass sie hinsichtlich ihres Aufbaues wesentlich einfacher und kostengünstiger ausfällt.

Diese Aufgabe wird erfindungsgemäß durch die kennzeichnenden Merkmale des Anspruchs 1 gelöst. Auf Grund dieser Ausbildung erübrigt sich eine aufwendige Ansteuerung der einzelnen Leitbleche in dem haubenartigen Gehäuse. die Gehäusestellung ermöglicht den konvergierenden bzw. divergierenden Strohauswurf. In zweckmäßiger Weise sind dabei die Leitbleche in den Teilhauben in Langlöchern verschraubt, so dass die individuelle Grundeinstellung der Leitbleche zueinander möglich ist. Die Verstelleinrichtungen zur unabhängigen Ansteuerung der Teilhauben können ebenfalls am Grundrahmen befestigt werden.

Nach einer vorteilhaften Weiterbildung der Erfindung können dabei einzelne oder alle Leitbleche gerade ausgebildet werden, wodurch ihre Herstellung vereinfacht wird.

In zweckmäßiger Weiterbildung der Erfindung besteht die Teilhaube im wesentlichen aus einem Deckblech, an dem in einfacher Weise die Leitbleche befestigt sind und wobei seitlich ein Begrenzungsblech ange-ordnet ist. Somit lässt sich in einfacher Weise eine Verteileinrichtung herstellen, die lediglich aus drei Elementen herstellbar ist, gegenüber einer Bewegungsmechanik des Standes der Technik, die wesentlich schwergängiger und störanfälliger ist. Zur einfachen Betätigung der Verteileinrichtung wird nach der Erfindung vorgeschlagen. die Verstelleinrichtung hand- oder aber auch kraftbetrieben auszubilden. Hier sind alle Möglichkeiten denkbar, Hubspindelmotor, Hydraulik- oder Pneumatikzylinder oder aber eine einfache Feststelleinrichtung mit einer Knebelmutter. Die verschiedenen Ansteuerungen können auch in einer Kombination angeordnet sein.

Ein Ausführungsbeispiel der Erfindung wird an Hand der nachstehenden Figuren 1-4 näher erläutert, dabei zeigen:
- Figur 01:: Den Heckbereich eines Mähdreschers in Seitenansicht
- Figur 02:: Eine Draufsicht auf die Verteileinrichtung in konvergierender Stellung
- Figur 03:: Eine weitere Draufsicht gemäß der Fig. 02 in divergierender Stellung
- Figur 04:: Eine weitere Darstellung der Verteileinrichtung in Draufsicht in Ausrichtung zu einer Seite

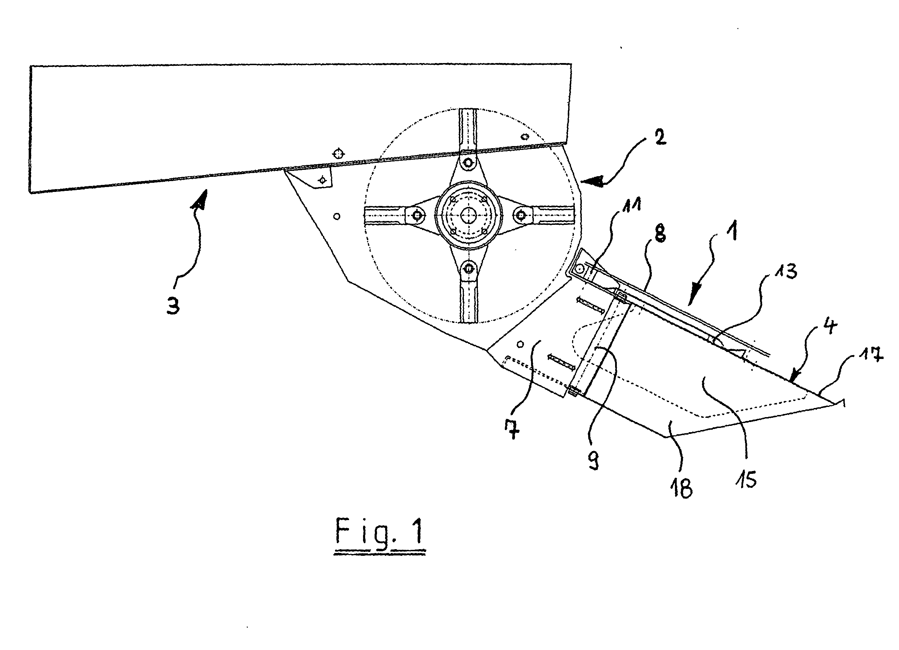

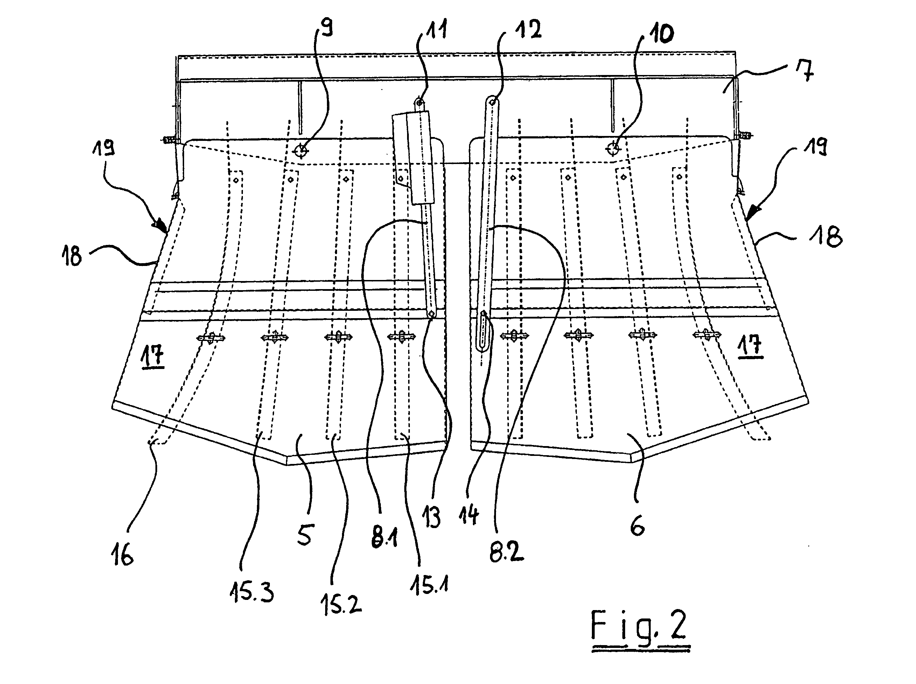

Die Figur 1 zeigt in der Seitenansicht eine Verteileinrichtung 1 für einen Häcksler 2, der am Heck 3 eines nicht näher dargestellten Mähdreschers angeordnet ist. Die Verteileinrichtung 1 besteht dabei aus einem haubenartig ausgebildeten Gehäuse 4, welches dem Häcksler 2 nachgeschaltet ist. Das Gehäuse 4 besteht dabei aus zwei Teilhauben 5 und 6, die getrennt an einem Grundrahmen 7 schwenkbar gelagert und unabhängig voneinander ansteuerbar sind, näher dargestellt in den Figuren 2, 3 und 4. An dem Grundrahmen 7 sind ebenfalls die Verstelleinrichtungen 8.1 und 8.2 zur unabhängigen Ansteuerung der Teilhauben 5 und 6 gelagert. Dies wird klarer in der Darstellung der Figur 2, wo in der Draufsicht der Grundrahmen 7 zu erkennen ist, an dem die Teilhauben 5 und 6 auf Lagerbolzen 9 und 10 schwenkbar gelagert sind.
Auch sind an dem Grundrahmen 7. wie bereits erwähnt, die Verstelleinrichtungen 8.1 und 8.2 an den Punkten 11 und 12 gelagert und stehen über weitere Lagerungspunkte 13 und 14 mit den Teilhauben 5 und 6 in Verbindung.

Wie in dem Ausführungsbeispiel der Fig. 02. 03 und 04 zu erkennen ist. ist die Verstelleinrichtung 8.1 als eine hydraulische Verstelleinrichtung 8.1 ausgebildet, wobei die Verstelleinrichtung 8.2 als eine handbetriebene ausgebildet ist. Üblicherweise werden beide Seiten in gleicher Weise angesteuert, es sind aber auch Kombinationen möglich.

Wie weiter in den Figuren 02, 03 und 04 zu erkennen ist, sind in den Teilhauben 5 bzw. 6 im Mittelbereich des Strohauswurfes gerade Leitbleche 15.1, 15.2 und 15.3 angeordnet, wobei an dem äußeren Randbereich des Strohauswurfes ein gebogenes Leitblech 16 vorgesehen ist. Wie aus der Figur 01 in der Seitenansicht, aber auch aus der Draufsicht der Figuren 02, 03 und 04 zu erkennen ist, besteht die Teilhaube 5 bzw. 6 im wesentlichen aus einem Deckblech 17, an dem die Leitbleche 15.1, 15.2 und 15.3 und 16 befestigt sind. Seitlich begrenzt wird das Deckblech 17 zum Schutz des Häckslers vor Hineingreifen durch ein Begrenzungsblech 18, welches unter einer nach außen weisenden Schräge 19 verläuft, um einen sich nach aussen öffnenden Auswurf zu ermöglichen.

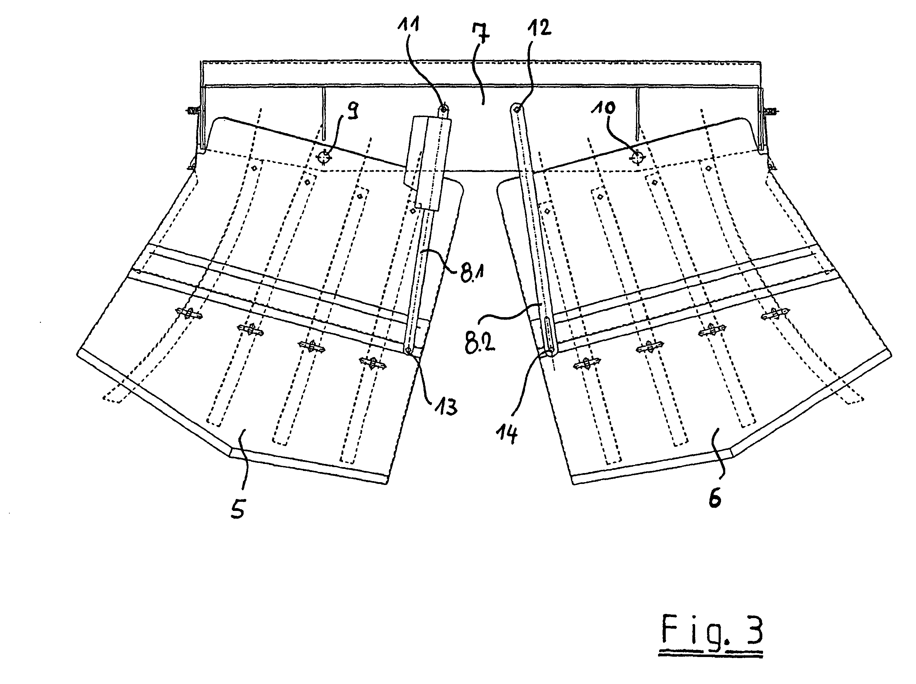

In den Darstellungen der Figuren 02, 03 und 04 sind nun im einzelnen die Stellungen der Teilhauben 5 und 6 dargestellt, wobei die Figur 02 die konvergierende Stellung der Teilhauben 5 und 6 zeigt und die Figur 03 die divergierende Stellung, so dass sich ein enger bzw. ein breiter Strohauswurf ergibt.

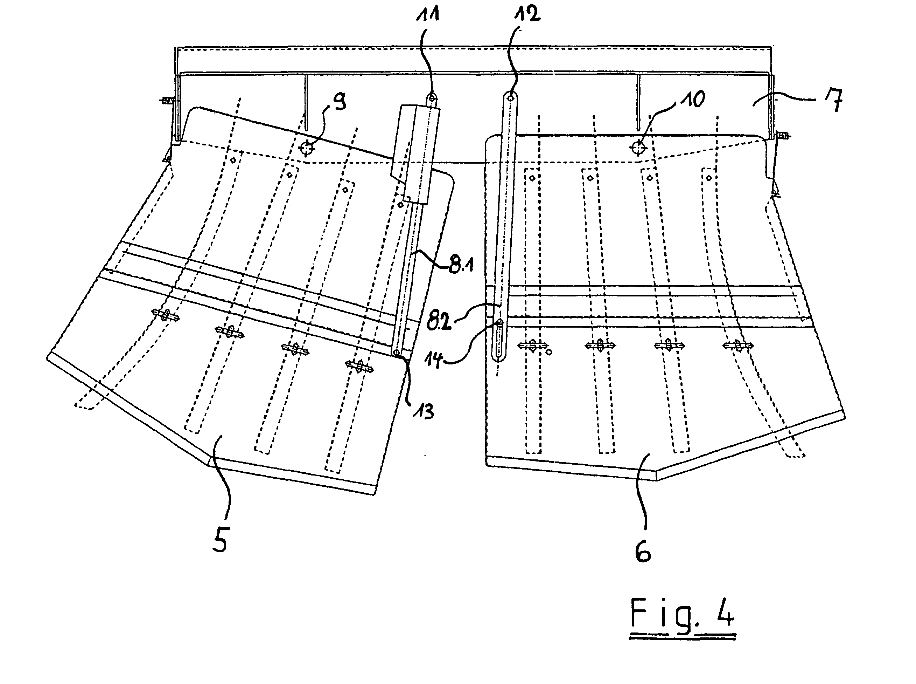

In Figur 04 ist die einzelne Ansteuerung der Teilhauben 5 bzw. 6 dargestellt. die bevorzugt motorisch betätigt besonders in Küstennähe eingesetzt wird, um gegen Seitenwind ansteuern zu können.

## Patentansprüche

1. Verteileinrichtung für Häcksler an einem Mähdrescher, welche aus einem haubenartig ausgebildeten Gehäuse besteht, in dem schwenkbar gelagerte Leitbleche in Gruppen angeordnet sind, um einen konvergierenden bzw. divergierenden Strohauswurf zu bewirken, **dadurch gekennzeichnet, dass** das Gehäuse (4) aus zwei Teilhauben (5) und (6) besteht, die getrennt an einem Grundrahmen (7) schwenkbar gelagert und unabhängig voneinander einstellbar sind, wobei die Gehäusestellung den konvergierenden bzw. divergierenden Strohauswurf ermöglicht.

2. Verteileinrichtung nach Anspruch 1, **dadurch gekennzeichnet, dass** an dem Grundrahmen (7) ebenfalls die Verstelleinrichtungen (8.1) und (8.2) zur unabhängigen Ansteuerung der Teilhauben (5) und (6) gelagert sind.

3. Verteileinrichtung nach den Ansprüchen 1 oder 2, **dadurch gekennzeichnet, dass** eine der Teilhauben (5) oder (6) ansteuerbar ist, während die andere in einem festen oder einstellbaren Abstand mit dieser verbunden ist.

4. Verteileinrichtung nach einem oder mehreren der Ansprüche 1 bis 3, **dadurch gekennzeichnet, dass** die Teilhaube (5) bzw. (6) im wesentlichen aus einem Deckblech (17) besteht, an dem die Leitbleche (15.1, 15.2, 15.3, 16) befestigt sind, und seitlich ein Begrenzungsblech (18) angeordnet ist, welches unter einer Schräge (19) verläuft.

5. Verteileinrichtung nach einem oder mehreren der vorhergehenden Ansprüche 1 bis 4, **dadurch gekennzeichnet, dass** die Verstelleinrichtungen (8.1) und (8.2) hand- und oder kraftbetrieben ausgebildet sind.

## Claims

1. Distributing device for a chopper on a combine-harvester, comprising a housing having a hood-like form, in which pivotably supported guide plates are arranged in groups, in order to cause straw to be ejected in a converging or diverging manner. **characterised in that** the housing (4) is comprised of two partial hoods (5) and (6) which are separately pivotably supported on a base frame (7) and can be adjusted independently of one another, with the position of the housing being such as to allow the converging or diverging ejection of the straw.

2. Distributing device as claimed in Claim 1, **characterised in that** the adjusting devices (8.1) and (8.2) for independently controlling the partial hoods (5) and (6) are also supported on the base frame (7).

3. Distributing device as claimed in Claim 1 or 2, **characterised in that** one of the partial hoods (5) or (6) can be controlled, whilst the other is connected thereto at a fixed or adjustable distance.

4. Distributing device as claimed in one or more of Claims 1 to 3. **characterised in that** the partial hood (5) or (6) is essentially comprised of a top plate (17) to which the guide plates (15.1, 15.2. 15.3, 16) are affixed, and a delimiting plate (18) is arranged laterally which runs under an inclination (19).

5. Distributing device as claimed in one or more of the foregoing Claims 1 to 4, **characterised in that** the adjusting devices (8.1) and (8.2) are configured in such a way that they can be manually and/or power operated.

## Revendications

1. Répartiteur pour hachoir sur une moissonneuse-batteuse, qui se compose d'un logement, dont la configuration est de type capot, dans lequel sont disposées en groupes des tôles de guidage placées de façon pivotante, pour provoquer une éjection de paille convergente ou divergente, **caractérisé en ce que** le logement (4) se compose de deux capots partiels (5) et (6) qui sont logés séparément de façon pivotante sur un châssis de base (7) et peuvent être réglés indépendamment l'un de l'autre, moyennant quoi la position du boîtier permet l'éjection de paille convergente ou divergente.

2. Répartiteur selon la revendication 1. **caractérisé en ce que** les installations de réglage (8.1) et (8.2) sont également placées sur le châssis de base (7) en vue de la commande indépendante des capots partiels (5) et (6).

3. Répartiteur selon les revendications 1 ou 2. **caractérisé en ce qu'**un des capots partiels (5) ou (6) peut être commandé, tandis que l'autre est relié à celui-ci à une distance fixe ou ajustable.

4. Répartiteur selon une ou plusieurs des revendications 1 à 3. **caractérisé en ce que** le capot partiel (5) ou (6) se compose essentiellement d'une tôle de couverture (17) sur laquelle sont fixées les tôles de guidage (15.1, 15.2, 15.3, 16). et sur le côté duquel est disposée une tôle de délimitation (18) qui s'étend sous une pente (19).

5. Répartiteur selon une ou plusieurs des revendications précédentes 1 à 4, **caractérisé en ce que** les installations de réglage (8.1) et (8.2) sont configurées en fonctionnement manuel ou mécanique.
